# EUROPEAN PATENT APPLICATION

(11) **EP 3 352 424 A1**
(43) Date of publication of application: **25.07.2018**
(21) Application number: 16845949.3
(22) Date of filing: 13.09.2016
(51) Int. Cl.: H04L 12/66, H04L 12/70, H04W 92/12, H04W 92/20

(54) **RELAY DEVICE, ACCESS NODE, RELAY DEVICE CONTROL METHOD AND ACCESS NODE CONTROL METHOD**

(30) Priority: 18.09.2015 JP 2015185359
(71) Applicant: NEC Corporation, Tokyo 108-8001 (JP)
(72) Inventor: ENDO, Hiroya, Tokyo 108-8001 (JP)
(74) Representative: MacDougall, Alan John Shaw
(86) International application number: PCT/JP2016/004159
(87) International publication number: WO 2017/047075

(57) **Abstract**

Provided is a relay device for notifying an access node connected to an interface connected to the relay device of whether the interface is usable, the relay device being configured so as to connect to a plurality of access nodes. The relay device includes a processor configured so as to determine whether an interface connecting a first access node and a second access node via the relay device is usable. In addition, the relay device includes a transmitter configured so as to transmit, to the first access node and/or the second access node, information that is based on the results determined by the processor.

## Description

### [Technical Field]

The present disclosure relates to a relay apparatus, an access node, a control method of a relay apparatus, and a control method of an access node.

### [Background Art]

There have been interfaces that connect among a plurality of access nodes via a relay apparatus.

For example, NPL 1 discloses a wireless communication system in a long term evolution (LTE) system. In this wireless communication system, a plurality of wireless base stations (eNB: eNodeB) are connected by an X2 interface so as to transmit and receive control signals and user signals without going through a core network.

In addition, this wireless communication system includes a femto-cell base station (HeNB: Home eNodeB). This femto-cell base station is connected to a wireless base station (macro-cell base station) by an X2 interface.

In addition, NPL 1 illustrates an X2 gateway (X2 GW: X2 GateWay), on an X2 interface that connects either between a plurality of femto-cell base stations or between a femto-cell base station and a wireless base station. The X2 gateway relays control signals and user signals between the base stations.

### [Citation List]

### [Non Patent Literature]

[NPL 1] 3GPP TS36.300(V12.6.0), "Evolved Universal Terrestrial Radio Access (E-UTRA) and Evolved Universal Terrestrial Radio Access Network (E-UTRAN) Physical Channels", June 2015

### [Summary of Invention]

### [Technical Problem]

System resuming (e.g., rebooting) is occasionally performed in relay apparatuses such as X2 gateways as mentioned above. In such a case, all the connections concerning the interfaces connected to this relay apparatus will be disconnected. So as to re-establish the disconnected connections, an access node such as a wireless base station may transmit a control signal to the relay apparatus. The more the access nodes connected to the relay apparatus, a larger number of control signals may be transmitted.

This is attributed to the fact that the access node connected to the interface cannot be informed of whether that interface connected to this relay apparatus is available or not.

In view of this, an objective of an example embodiment is to provide a system by which an access node connected to an interface can be informed of whether that interface connected to a relay apparatus is available or not.

### [Solution to Problem]

A relay apparatus according to an example embodiment is configured to be connected to a plurality of access nodes. The relay apparatus comprises a processor configured to decide whether or not an interface that connects between a first access node and a second access node via the relay apparatus is available. In addition, the relay apparatus comprises a transmitter configured to transmit information based on a result decided by the processor, to at least one of the first access node and the second access node.

An access node according to another example embodiment is connected to a relay apparatus. The access node comprises a receiver configured to receive, from the relay apparatus, information on whether or not an interface that connects between the access node and another access node via the relay apparatus is available.

A control method according to another example embodiment is a method of a relay apparatus configured to be connected to a plurality of access nodes. The control method comprises: deciding whether or not an interface that connects between a first access node and a second access node via the relay apparatus is available; and transmitting information based on the decided result, to at least one of the first access node and the second access node.

A control method according to another example embodiment is a method of an access node connected to a relay apparatus. The control method comprises: receiving, from the relay apparatus, information on whether or not an interface that connects between the access node and another access node via the relay apparatus is available.

### [Advantageous Effects of Invention]

According to an example embodiment, an access node connected to an interface can be informed of whether or not that interface connected to a relay apparatus is available.

### [Brief Description of Drawings]

[Fig.1] Fig. 1 illustrates a wireless communication system according to a first example embodiment.
[Fig. 2] Fig. 2 illustrates an X2 gateway according to the first example embodiment.
[Fig. 3] Fig. 3 illustrates a wireless base station according to the first example embodiment.
[Fig. 4] Fig. 4 illustrates a connection managing table according to the first example embodiment.
[Fig. 5] Fig. 5 illustrates an example of an X2 Suspend message according to the first example embodiment.
[Fig. 6] Fig. 6 illustrates an example of X2 Resume message according to the first example embodiment.
[Fig. 7] Fig. 7 illustrates an operation of the wireless communication system according to the first example embodiment.
[Fig. 8] Fig. 8 illustrates a wireless base station according to a second example embodiment.
[Fig. 9] Fig. 9 illustrates an operation of a wireless communication system according to the second example embodiment.
[Fig. 10] Fig. 10 illustrates an operation of a wireless communication system according to a third example embodiment.
[Fig. 11] Fig. 11 illustrates a wireless communication system according to a fourth example embodiment.
[Fig. 12] Fig. 12 illustrates a relay apparatus according to the fourth example embodiment.
[Fig. 13] Fig. 13 illustrates an access node according to the fourth example embodiment.

### [EXAMPLE EMBODIMENT]

The following describes in details example embodiments with reference to the drawings. The same or corresponding elements in each drawing are assigned the same reference numerals. For clarification purposes, overlapping explanation is omitted where necessary. The plurality of example embodiments described below can be implemented independently or in combination where necessary.

In addition, in the present description and the drawings, a plurality of constituting elements having substantially the same functional configuration may be distinguished thereamong by assigning thereto the same reference numeral followed by a mutually different alphabet. For example, such a plurality of constituting elements having substantially the same functional configuration are distinguished by HeNB30A and HeNB30B where necessary. However, if it is not particularly necessary to distinguish among a plurality of constituting elements having substantially the same functional configuration, only the same reference numeral will be assigned thereto. For example, if it is not particularly necessary to distinguish between HeNB30A and HeNB30B, they will be simply referred to as HeNB30.

### 1. The first example embodiment

The first example embodiment relates to a wireless communication system adopting an LTE system.

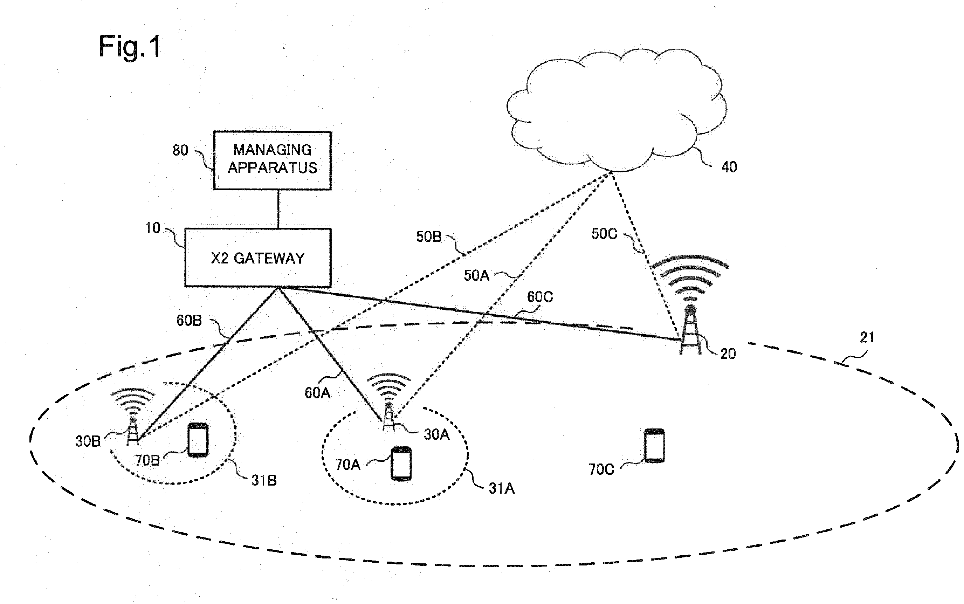

Fig. 1 illustrates a wireless communication system according to the first example embodiment. The wireless communication system according to the present example embodiment includes an X2GW 10, an eNB 20, an HeNB 30, an evolved packet core (EPC) 40, a user equipment (UE) 70, and a managing apparatus 80.

The X2GW 10 is connected with the eNB 20 by an X2 interface 60C. The X2GW 10 is connected with an HeNB 30A by an X2 interface 60A. The X2GW 10 is connected with an HeNB 30B by an X2 interface 60B.

In addition, the X2GW 10 relays a control signal (X2AP signal) from an eNB 20 or an HeNB 30 to another eNB 20 or another HeNB 30, based on a control protocol (X2AP: X2 application protocol) related to the X2 interface 60.

The eNB 20 forms a macro cell 21. The eNB 20 is configured to be communicable with a user terminal (UE 70C) existing in the macro cell 21. The eNB 20 is connected with the HeNB 30 (or an eNB 20) by the X2 interface 60, by going through the X2GW 10.

In this example, the HeNB 30A and the HeNB 30B are located within the macro cell 21. The HeNB 30A and the HeNB 30B may be located outside the macro cell 21. For example, the HeNB 30A and the HeNB 30B may be located in the vicinity of the macro cell 21.

The HeNB 30A forms a femto cell 31A. The HeNB 30B forms a femto cell 31B. The HeNB 30A is configured to be communicable with a UE 70A existing in the femto cell 31A. The HeNB 30B is configured to be communicable with an UE 70B existing in the femto cell 31B.

The EPC 40 is a core network. The EPC 40 may be configured by at least one core network apparatus. For example, the EPC 40 includes at least one of a mobility management entity (MME), a serving gateway (S-GW), and a packet data network (PDN) gateway (P-GW).

The EPC 40 controls over the data transmission and reception with the UE 70 or controls over the UE 70.

The EPC 40 is connected with the eNB 20 by an S1 interface 50C. The EPC 40 is connected with the HeNB 30A by an S1 interface 50A. The EPC 40 is connected with the HeNB 30B by an S1 interface 50B.

The managing apparatus 80 is connected with the X2GW 10. The managing apparatus 80 is configured to control over the X2GW 10. Here, the control includes to maintain or monitor the X2GW 10, for example. For example, the managing apparatus 80 may be configured to monitor or record the operational status of the X2GW 10 or the like; and to, when having detected any abnormality or sign, notify a managing terminal that controls or manages the X2GW 10. The managing apparatus 80 may be an element management system (EMS) or a network management system (NMS).

Note that there may be a plurality of X2GWs 10. There may be a plurality of eNBs 20. There may be three or more HeNBs 30. There may be four or more X2 interfaces 60. There may be four or more S1 interfaces 50.

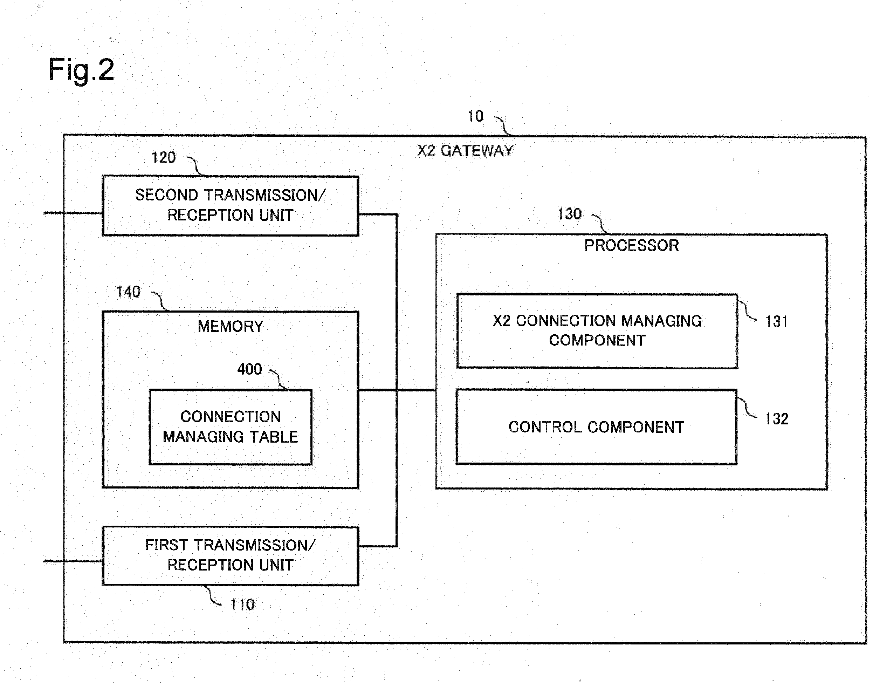

Fig. 2 illustrates an X2 gateway according to the first example embodiment.

In Fig. 2, the X2GW 10 includes a first transmission/reception unit 110, a second transmission/reception unit 120, a processor 130, and a memory 140.

The first transmission/reception unit 110 is configured to transmit and receive a signal on the X2 interface 60 that is either connected with the eNB 20 or with the HeNB 30.

The second transmission/reception unit 120 is configured to transmit and receive a control signal to and from the managing apparatus 80.

The processor 130 includes an X2 connection managing component 131 and a control component 132.

The X2 connection managing component 131 is configured to perform processing related to the X2AP protocol. The X2 connection managing component 131 can control over the signal relay on the X2 interface 60, based on the information stored in a connection managing table 400 described later.

In addition, the X2 connection managing component 131 is configured to, when resuming the system of X2GW 10, notify the wireless base station (the eNB 20 or the HeNB 30) which is connected thereto by the X2 interface 60, to suspend the usage (use) of the X2 interface 60.

In addition, the X2 connection managing component 131 is configured to, when completing the system resuming of the X2GW 10, notify the wireless base station (the eNB 20 or the HeNB 30) which is connected thereto by the X2 interface 60, to resume the use of the X2 interface 60. Note that such notifications may be issued based on the instruction from the control component 132.

The notification to suspend the use of the X2 interface 60 (X2 suspension message) may be an X2 Suspend message. The notification to resume the use of the X2 interface 60 (X2 resume message) may be an X2 Resume message.

The control component 132 is configured to control over the entire X2GW 10. For example, when the second transmission/reception unit 120 has received a control signal from the managing apparatus 80, the control component 132 instructs the X2 connection managing component 131 to start resuming the system or to complete the system resuming of the X2GW 10, based on the received control signal.

The memory 140 is configured to store therein information necessary for the X2GW 10. The memory 140 can keep storing the information even after the system resuming of the X2GW 10. In addition, the memory 140 includes the connection managing table 400.

The connection managing table 400 is configured to store therein priority information related to priority set depending on use frequency (usage frequency) of the wireless base station (the eNB 20 or the HeNB 30) which is connected to the X2GW 10. Higher priority information is set to a wireless base station having higher use frequency. Lower priority information is set to a wireless base station having lower use frequency. The setting is performed based on predetermined determination criteria.

Note that the communication status of the eNB 20 or the HeNB 30 that is connected to the X2GW 10 may be periodically collected and stored in the memory 140, by means of the procedure "Resource Status Reporting Initiation" of the X2AP protocol. For example, the X2GW 10 can obtain information on the use frequency (or the service use status) of a wireless base station, based on the collected communication status. The priority of the wireless base station may be set based on this information on the use frequency having been obtained.

The X2GW 10 may have a routing function of transmitting a control signal (also referred to as an X2AP signal) transmitted from an eNB 20 or an HeNB 30, to an eNB 20 or an HeNB 30 that corresponds to an appropriate destination.

Note that the X2 connection managing component 131 can control so that the X2 suspension message or the X2 resume message are transmitted at an appropriate timing depending on the priority. For example, the control may be performed so that the X2 suspension message is transmitted when resuming the system of X2GW 10. In addition, the control may be performed so that the X2 resume message is transmitted when completing the system resuming of the X2GW 10.

The X2 connection managing component 131 may be configured by a processor that is different from the control component 132. The first transmission/reception unit 110 and the processor 130 may be configured by a single processor. The processor 130 and the memory 140 may be configured by a single processor.

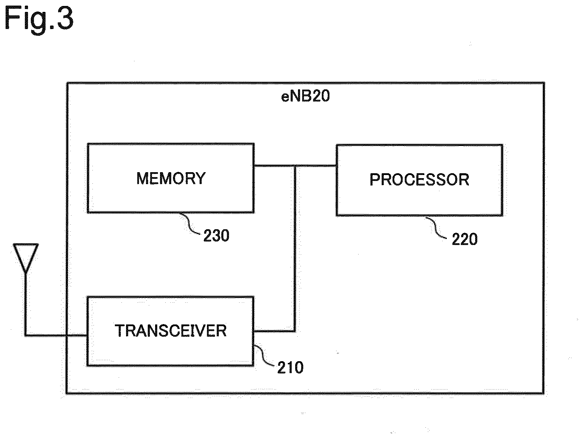

Fig. 3 illustrates a wireless base station according to the first example embodiment.

In Fig. 3, the eNB 20, being a wireless base station, includes a transceiver 210, a processor 220, and a memory 230. The HeNB 30 may also have a similar configuration to that of the eNB 20.

The transceiver 210 is configured to receive either an X2 suspension message or an X2 resume message.

The processor 220 is configured to control so as to suspend or resume the use of the X2 interface 60 connected to the eNB 20, based on the X2 suspension message or the X2 resume message, which has been received. For example, when having received the X2 suspension message, the processor 220 controls to stop the communication using the X2 connection related to the X2 interface 60. In addition, for example when having received the X2 resume message, the processor 220 controls to resume the communication using the X2 connection related to the X2 interface 60.

The memory 230 is configured to store therein information related to the X2 suspension message or the X2 resume message, which has been received.

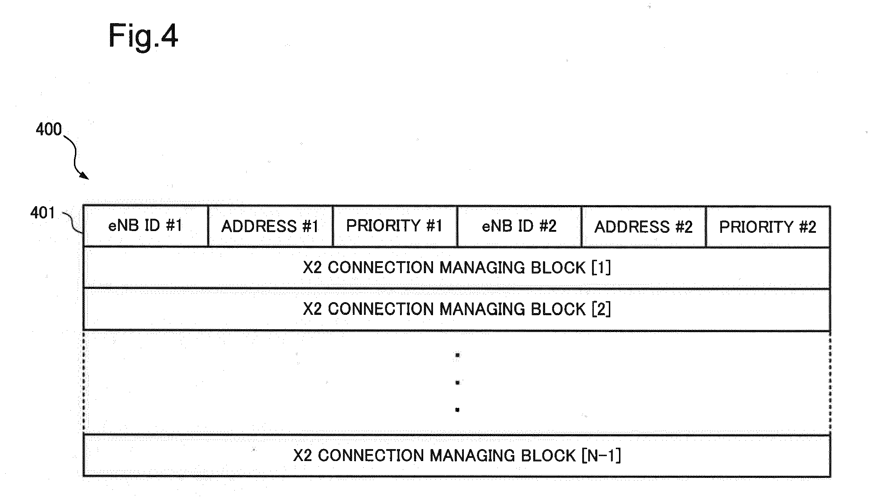

Fig. 4 illustrates an example of the connection managing table according to the first example embodiment. The connection managing table 400 is included in the memory 140 of the X2GW 10.

The connection managing table 400 stores therein information on the connection on the X2 interface 60 (also referred to as "X2 connection"). The connection managing table 400 stores therein information corresponding to at least one X2 connection.

The information corresponding to the X2 connection is managed in a unit of blocks. In the example of Fig. 4, that block is illustrated as an X2 connection managing block 401.

The X2 connection managing block 401 includes an eNB ID (identifier) #1, address information #1, and priority #1, as information on the wireless base station connected to one end of the X2 connection. In addition, the X2 connection managing block 401 includes an eNB ID (identifier) #2, address information #2, and priority #2, as information on the wireless base station connected to the other end of the X2 connection.

The eNB ID #1 and the eNB ID #2 are information identifying a wireless base station. For example, the eNB ID #1 and the eNB ID #2 may be a Global eNB ID to identify a wireless base station by means of an X2AP signal.

The address information #1 and the address information #2 may be information related to an IP address of a wireless base station.

The priority #1 and the priority #2 are information to determine the processing priority upon resume completion. For example, the priority #1 and the priority #2 identify between high priority and low priority.

The X2 connection managing block 401 is used to manage connection of at least one X2 connection relayed by the X2GW 10.

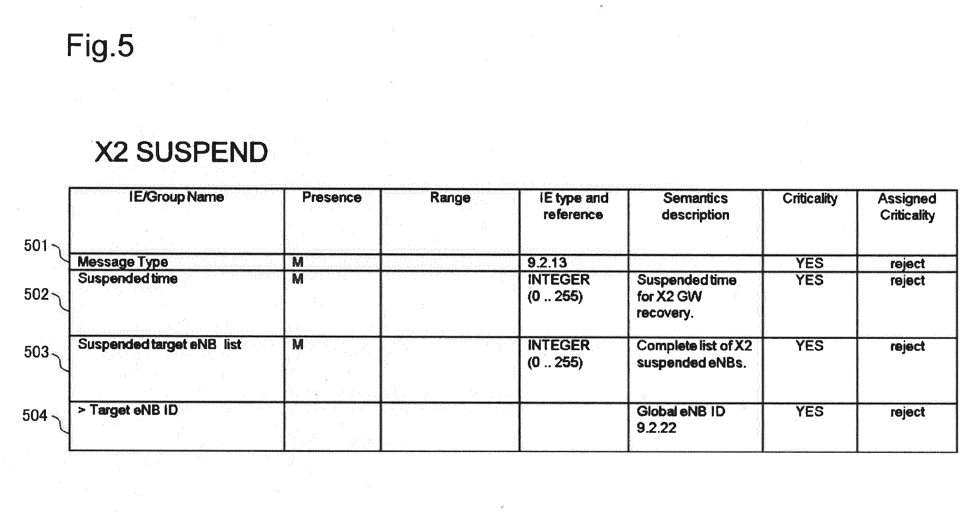

Fig. 5 illustrates an example of an X2 Suspend message according to the first example embodiment.

"Message Type 501" represents a type of an X2AP message.

"Suspended Time 502" represents a time during which the X2 connection is suspended. When a wireless base station (the eNB 20 or the HeNB 30) has received an X2 Suspend message, a timer provided in the wireless base station will be started. If the X2 connection is not resumed from suspension after the time indicated by the Suspended Time 502 after booting, the wireless base station determines that the X2 connection has been disconnected.

"Suspended target eNB list 503" is a list of eNBs 20 or HeNBs 30 to be suspended. The eNB 20 and the HeNB 30, having received an X2 Suspend message, recognize that the X2 connections with all the wireless base stations set in this list have been suspended. The list contains at least one Target eNB ID 504.

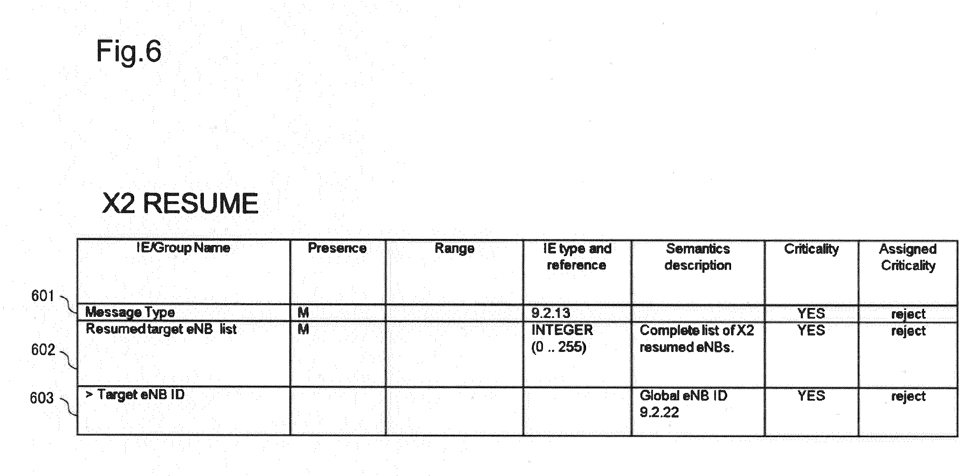

Fig. 6 illustrates an example of an X2 Resume message according to the first example embodiment.

"Message Type 601" represents a type of an X2AP message.

"Resumed target eNB list 602" is a list of eNBs 20 or HeNBs 30 whose X2 connection is to be resumed. This list contains at least one Target eNB ID 603. The eNB 20 and the HeNB 30, having received an X2 Resume message, recognize that the X2 connections with all the wireless base stations set in this list have been resumed.

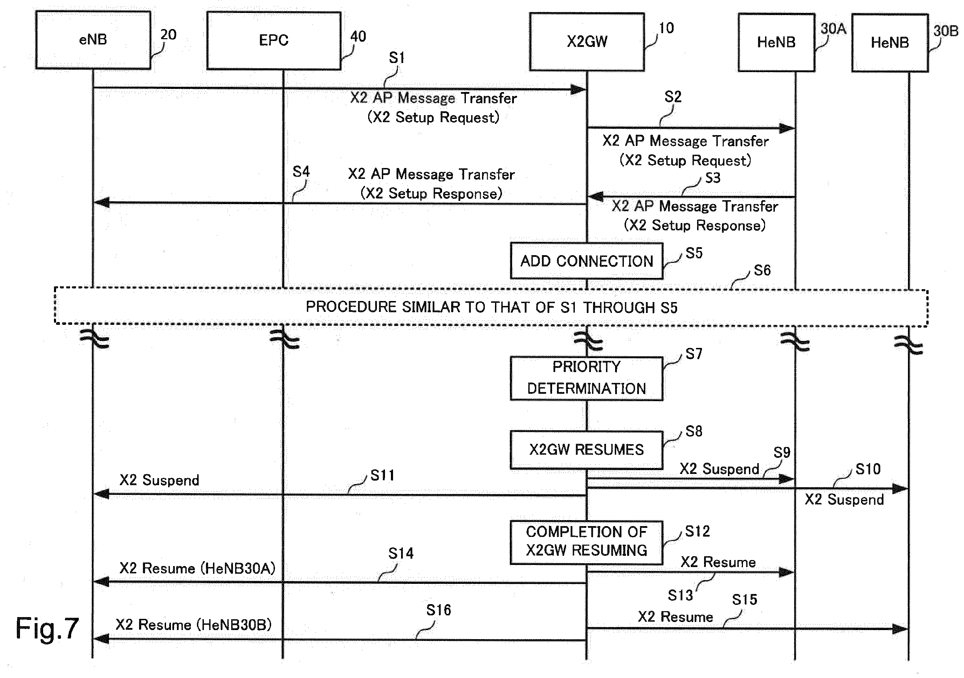

Fig. 7 illustrates an operation of the wireless communication system according to the first example embodiment.

S1 through S6 in Fig. 7 illustrate an operation while the X2 connection is connected.

In S1, the eNB 20 transmits an X2 Setup Request message to X2GW 10, using an X2AP Message Transfer message.

In S2, the X2GW 10 transmits an X2 Setup Request message to the HeNB 30A, using an X2AP Message Transfer message. According to S1 and S2, an X2 Setup Request message is transmitted from the eNB 20 to the HeNB 30A, by going through the X2GW 10.

In S3, the HeNB 30A transmits an X2 Setup Response message to the X2GW 10, using an X2AP Message Transfer message.

In S4, the X2GW 10 transmits an X2 Setup Response message to the eNB 20, using an X2AP Message Transfer message. According to S3 and S4, an X2 Setup Response message is transmitted from the HeNB 30A to the eNB 20, by going through the X2GW 10.

In S5, the X2GW 10 recognizes that the X2 connection has been set between the eNB 20 and the HeNB 30A. More specifically, the X2 connection managing component 131 in the X2GW 10 registers the eNB ID information and the address information of the eNB 20 and the HeNB 30A, in the X2 connection managing block 401 of the connection managing table 400. Note that only one of the eNB ID information and the address information may be registered. Note that S5 may be executed between S3 and S4.

In S6, the process similar to that of S1 through S5 is performed, and while the eNB 20 is connecting to the HeNB 30B, an X2 connection between the eNB 20 and the HeNB 30B is established. As a result, the eNB ID information and the address information of the eNB 20 and the HeNB 30B are registered in the X2 connection managing block 401 of the connection managing table 400.

According to S1 through S6 described above, the X2GW 10 can be informed of the information on the wireless base station related to the X2 connection having been registered in the connection managing table 400.

S7 trough S16 in Fig. 7 illustrate the operation of the X2GW 10 under operation.

In S7, the priority determination is performed on the eNB 20 or the HeNB 30 included in the connection managing table 400, and the priority information is registered.

For example, the X2 connection managing component 131 collects information on the eNB 20 or the HeNB 30. The timing for the collection is based on either a predetermined period or a predetermined trigger. For example, the method for the collection may be the procedure "Resource Status Reporting Initiation" of the X2AP. The information to be collected may be the uncommunicable status of the eNB 20 or the HeNB 30, for example. The X2GW 10, based on the collected information, determines whether the service use frequency is high or low in each wireless base station (the eNB 20 or the HeNB 30). This determination may be performed based on all the collected information. In addition, this determination may be determined based on at least one of the information such as DL S1 Transport Network Layer (TNL) Load Indicator, UL S1 TNL Load Indicator, Hardware Load Indicator, Radio Resource Status, and Composite Available Capacity Group. This determination is performed based on pre-set determination criteria (predetermined threshold value). For example, a wireless base station whose service use frequency is higher than a predetermined threshold value is assigned high priority. On the other hand, a wireless base station whose service use frequency is lower than the predetermined threshold value is assigned low priority. The priority may be set by assigning numbers such as 1, 2, 3, ... N, in the order of higher priority.

In the example of Fig. 7, S7 results in setting high priority to the eNB 20 and the HeNB 30A, and setting low priority to the HeNB 30B. For example, this is set by setting priority information to the blocks representing priority in the X2 connection managing block 401 in Fig. 4. Here, the configuration of the connection managing table 400 in Fig. 4 is merely an example. It is also possible to register a wireless base station to be connected to, for each wireless base station. In addition, it is also possible to configure to distinguish between the eNB 20 and the HeNB 30 using the eNB ID information, and to make it a rule to always determine that the eNB 20 has high priority.

In S8, the system resuming of the X2GW 10 is decided. For example, the system resuming is decided based on a control signal from the managing apparatus 80.

In S9 through S 11, the X2 connection managing component 131 of the X2GW 10 transmits an X2 Suspend message to all the wireless base stations having been registered in the X2 connection managing block 401 (i.e., in this case, eNB 20, HeNB 30A, HeNB 30B). The wireless base stations having received the X2 Suspend message (i.e., eNB 20, HeNB 30A, HeNB 30B) recognize that the use of the X2 connection that goes through the X2GW 10 is suspended.

In S12, the system resuming completes. The X2GW 10 confirms the priority of all the wireless base stations (eNB 20, HeNB 30A, HeNB 30B) registered in the X2 connection managing component 131. Here, the eNB 20 and the HeNB 30A are assigned high priority.

In S13, the X2GW 10 transmits an X2 Resume message, in which the eNB ID information of the eNB 20 to be connected to is set to the Target eNB ID 603, to the HeNB 30A.

In S14, the X2GW 10 transmits an X2 Resume message, in which the eNB ID information of the HeNB 30A to be connected to is set to the Target eNB ID 603, to the eNB 20.

According to S13 and S14, the X2 connections related to the eNB 20 or the HeNB 30A having high priority can preferentially resume service.

Next, the remaining X2 connection (connection between the eNB 20 and the HeNB 30B) having low priority set thereto will be described.

In S15, the X2GW 10 transmits an X2 Resume message, in which the eNB ID information of the eNB 20 to be connected to is set to the Target eNB ID 603, to the HeNB 30B.

In S16, the X2GW 10 transmits an X2 Resume message, in which the eNB ID information of the HeNB 30B to be connected to is set to the Target eNB ID 603, to the eNB 20.

Accordingly, all the X2 connections having been suspended, resume.

Note that the X2 Resume message to the X2 connection having low priority may be transmitted based on a timer pre-set by the X2 connection managing component 131 of the X2GW 10. For example, the X2 Resume message may be transmitted either after S8 or after a predetermined time has elapsed after transmission in Step S9 through S11.

As described above, the eNB 20 or the HeNB 30 connected to the X2 interface may be informed of whether or not that X2 interface connected to the X2GW 10 being the relay apparatus is available.

For example, in such a situation in which the macro cell 21 illustrated in Fig. 1 includes a large number of HeNBs 30, a large number of X2 interfaces 60 are formed between the X2GW 10 and the HeNB 30. In such a situation, when the X2GW 10 is rebooted due to some reason such as maintenance operations or failures, all the X2 interfaces 60 connected to the X2GW 10 will be disconnected. If this happens, the X2GW 10 will be rebooted. During rebooting of the X2GW 10, there is a possibility of the eNB 20 or the HeNB 30 issuing a large number of control signals to re-establish the X2 connection. In such a case, each of the eNB 20, the HeNB 30, or the EPC 40 may be affected. For example, when the X2GW 10 is in the midst of system resuming (rebooting), X2 connection establishment requests transmitted to the X2GW 10 may not be processed properly. According to this, the X2 connection establishment procedure may be repeated. In particular, it is very likely that an eNB 20 has established an X2 connection with many eNBs 20 existing in the macro cell 21. This may cause a problem of the eNB 20 being subject to a large load.

According to the first example embodiment, the eNB 20 or the HeNB 30 connected to the X2 interface can be informed of whether that X2 interface connected to the X2GW 10 is available, in advance. This resolves a problem of causing unnecessary signaling.

When the X2GW 10 has completed the system resuming, there is a possibility that all the eNB 20 or the HeNB 30 connected to the X2GW 10 will simultaneously perform the X2 connection establishment procedure. In such a case, the processing load may concentrate on the X2GW 10 or the eNB 20 (macro base station), which is problematic.

According to the first example embodiment, by explicitly notifying the timing of resume of the X2GW 10, the eNB 20 or the HeNB 30 can use the X2 connection early, and the effect of resuming the X2GW on the service system can be restrained.

In addition, as in the above-described case, when the X2 connection cannot be re-established even by repeatedly issuing an X2 connection establishment request, the setting information related to the X2 connection registered in the memory of the eNB 20 or the HeNB 30 may be cleared. In that case, the eNB 20 or the HeNB 30 may collect information on base stations in the neighborhood of the eNB 20 or the HeNB 30 itself for example by performing the TNL Address Discovery procedure. However, in that case, a large number of control messages may be transmitted from the wireless base station to the EPC 40.

According to the first example embodiment, the timing at which the X2GW 10 stops is explicitly notified. Therefore, the core network is prevented from undergoing the TNL Address Discovery procedure. In this way, the transmission of unnecessary S1 signals can be restrained.

### 2. The second example embodiment

The second example embodiment is described below. Basically, the second example embodiment has a configuration similar to that of the first example embodiment. Therefore, the portion similar to that of the first example embodiment will not be explained below as much as possible.

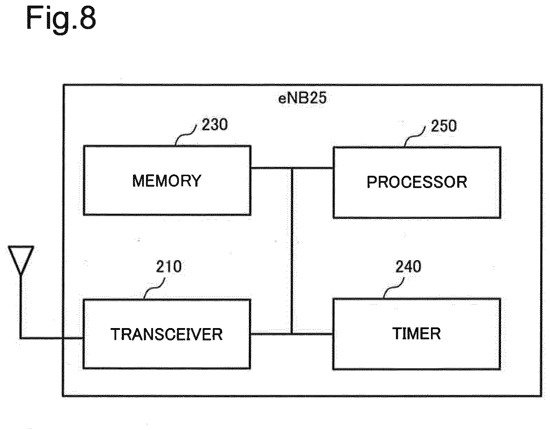

Fig. 8 illustrates a wireless base station according to the second example embodiment.

In Fig. 8, the eNB 25 includes a transceiver 210, a memory 230, a timer 240, and a processor 250. The HeNB 35 also includes similar elements to those of the eNB 25.

The setting value of the Suspended Time 502 included in the X2 Suspend message received from the X2GW 10 is set to the timer 240.

The processor 250 is configured to determine that the X2 connection, having been suspended, is resumed (and is available), if not receiving X2 Resume message until the timer 240 expires.

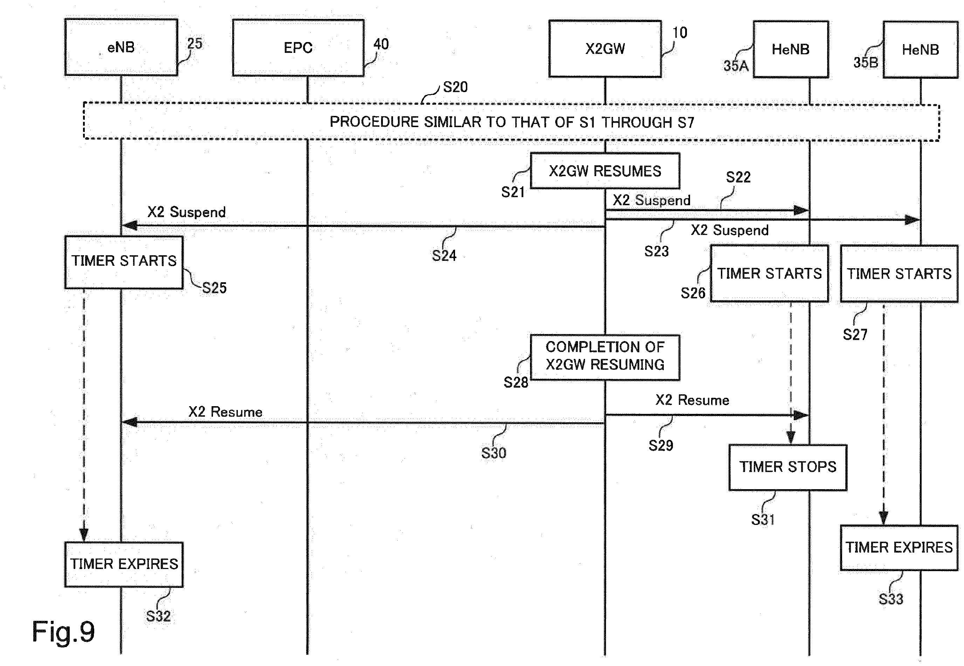

Fig. 9 illustrates an operation of the wireless communication system according to the second example embodiment.

The eNB 25, the HeNB 35A, and the HeNB 35B, which are connected to the X2GW 10, include a timer 240.

In S20, each piece of information in the connection managing table 400 is set, similarly to S1 through S7 in Fig. 7.

In S21, the system resuming for the X2GW 10 is decided.

In S22, S23, and S24, the X2GW 10 transmits an X2 Suspend message to the eNB 25, the HeNB 35A, and the HeNB 35B which are in connection.

In S25, S26, and S27, the eNB 25, the HeNB 35A, and the HeNB 35B set, to the timer 240, the setting value of the Suspended Time 502 which has been set in the X2 Suspend message, and start the timer 240.

In S28, the system resuming is completed.

In S29, an X2 Resume message is transmitted to an HeNB 35A that relates to an X2 connection having high priority.

In S30, an X2 Resume message is transmitted to an eNB 25 that relates to an X2 connection having high priority.

Here, the eNB 25 and the HeNB 35A, having received the X2 Resume, resume using the X2 connection having been suspended.

In S31, the HeNB 35A stops the timer 240, because all the X2 connections, which relate to the HeNB 35A, have been resumed.

Here, the eNB 25 does not stop the timer 240 (also referred to as X2 suspension monitoring timer) and continues monitoring, because not all the suspended X2 connections are not resumed.

In S32, the timer 240 of the eNB 25 expires. At this point in time, the eNB 25 determines that the suspension of the X2 connection is cancelled because a sufficient time has elapsed. Thereafter, use of the X2 connection will resume.

In S33, the timer 240 of the HeNB 35B expires. At this point in time, the HeNB 35B determines that the suspension of the X2 connection is cancelled because a sufficient time has elapsed. Thereafter, use of the X2 connection will resume.

In the above manner, with respect to an X2 connection having low priority (connection between the eNB 25 and the HeNB 35B), that X2 connection can be resumed, even without explicitly transmitting an X2 Resume message from the X2GW 10.

### 3. The third example embodiment

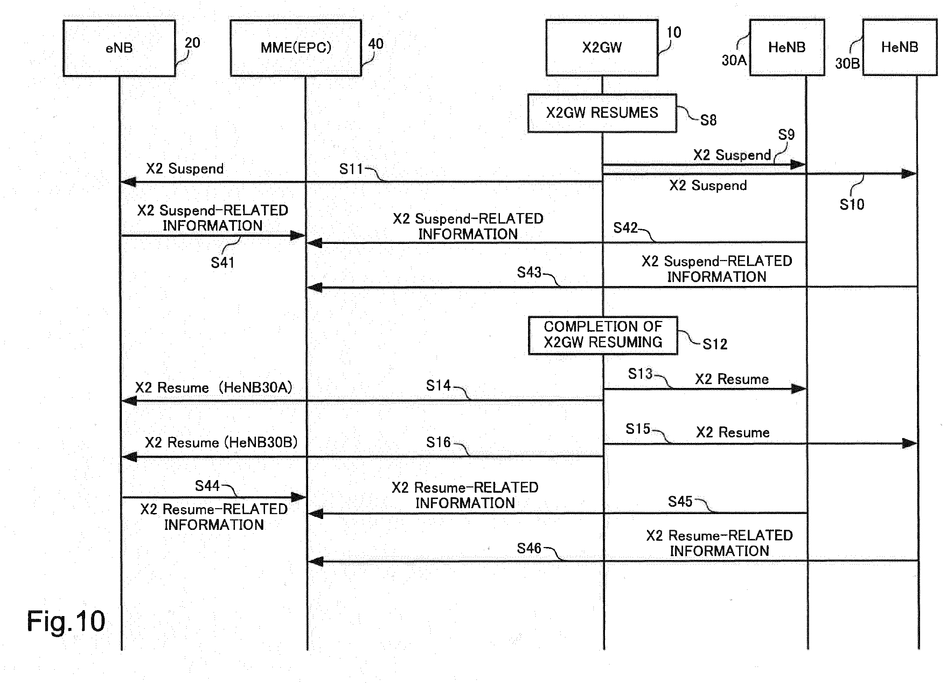

Fig. 10 illustrates an operation of a wireless communication system according to the third example embodiment. Besides those steps in Fig. 7, Fig. 10 additionally includes S41, S42, S43, S44, S45, and S46.

In the present example embodiment, the wireless base station notifies the EPC 40 of system resuming (or system stop) of the X2GW 10.

In S41, the eNB 20 transmits information related to the X2 Suspend message to the EPC 40. Accordingly, the EPC 40, i.e., the recipient, can know that the X2GW 10 will resume the system.

Similarly, in S42, the HeNB 30A transmits information related to the X2 Suspend message to the EPC 40. In S43, the HeNB 30B transmits information related to the X2 Suspend message to the EPC 40.

The EPC 40 (e.g., MME) may determine that the X2GW 10 has resumed the system, when the EPC 40 has received a predetermined number of pieces of information related to the X2 Suspend message during the predetermined time.

In addition, in the present example embodiment, the wireless base station notifies the EPC 40 of the X2GW 10 having completed the system resuming (or the system stop) and is to resume.

In S44, the eNB 20, having received the X2 Resume message, transmits, to the EPC 40, the information related to the X2 Resume message.

Similarly, in S45, the HeNB 30A transmits the information related to the X2 Resume message to the EPC 40.

In S46, the HeNB 30B transmits the information related to the X2 Resume message to the EPC 40.

Accordingly, the EPC 40, i.e., the recipient, can know that the X2GW 10 has completed the system resuming, and is to resume.

Note that the EPC 40 (e.g., MME) may determine that the X2GW 10 has completed the system resuming and has resumed, when the EPC 40 has received a predetermined number of pieces of information related to the X2 Resume message during the predetermined time.

### 4. The fourth example embodiment

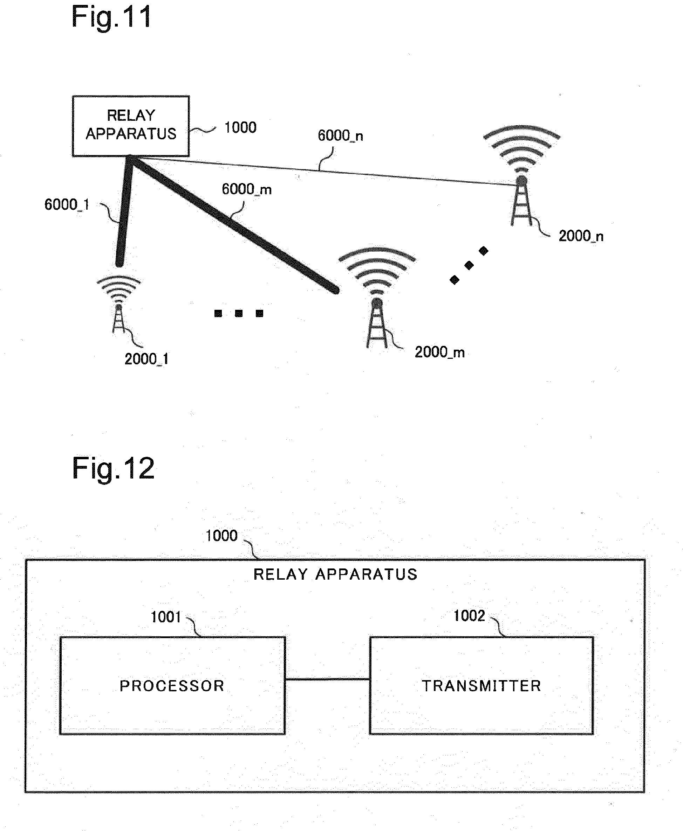

Fig. 11 illustrates a wireless communication system according to the fourth example embodiment.

The wireless communication system includes a plurality of access nodes (2000_1 ...2000_m...2000_n) and a relay apparatus 1000. The relay apparatus 1000 is configured to be connectable to the plurality of access nodes 2000.

In the example of Fig. 11, the relay apparatus 1000 transmits, to at least one of the first access node 2000_1 and the second access node 2000_m, information on whether or not the interfaces (6000_1 and 6000_m) connecting between the first access node 2000_1 and the second access node 2000_m via the replay apparatus 1000 is available.

Note that the reference numerals "m" and "n" represent any integer.

Fig. 12 illustrates a relay apparatus according to the fourth example embodiment. In Fig. 12, the relay apparatus 1000 includes a processor 1001 and a transmitter 1002.

The processor 1001 is configured to decide whether or not an interface that connects between the first access node and the second access node via the relay apparatus 1000 is available.

The transmitter 1002 is configured to transmit information based on the result decided in the processor 1001, to at least one of the first access node and the second access node.

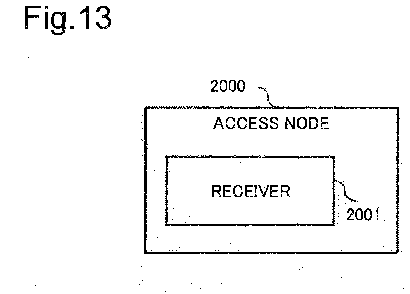

Fig. 13 illustrates an access node according to the fourth example embodiment. The access node 2000 in Fig. 13 includes a receiver 2001.

The receiver 2001 is configured to receive, from the relay apparatus, information on whether or not the interface connecting between an access node and another access node via the replay apparatus is available.

### 5. Other example embodiments

In the above description, such expressions as "system resuming" or "completion of or to complete the system resuming" are used to explain the transmission timing of various types of messages. Alternatively, the X2 suspension message may be transmitted to the related wireless base station before the X2GW is stopped. Still alternatively, the X2 resume message may be transmitted to the related wireless base station before the X2GW resumes.

Such terms as "wireless base station" and "access node" used in the present application will now be explained. The wireless base station or the access node may be used in communication with one or more wireless terminals, and may include a part or all of the functionality of the access point, the node, the evolved node B (eNB), or any other network entities. The base station communicates with a UE via an air interface. Occasionally, this communication may be performed by going through one or more sectors. The base station may function as a router that acts between the UE and the remaining access networks that can include the internet protocol (IP) network, by converting the received air interface frames into IP packets. The base station can also adjust management of attributes for the air interface, and may also be a gateway between a wired network and a wireless network.

Such terms as "component" and "system" used in the present application are assumed to include, but not limited to, any computer-related entities such as hardware, firmware, a combination of hardware and software, software, and software under execution.

For example, a component may be, but not limited to, at least one of a process executed on a processor, a processor, an object, an execution file, an execution thread, a program, and a computer.

An example of the component is an application executed on a computing device and the computing device.

One or more components may reside on at least one of a process and an execution thread. One component may be located on one computer, and/or distributed on two or more computers.

In addition, these components may be executed from various computer readable media storing various data structures therein. These components may interact with another component in the distributed system or the local system using a signal, and/or may communicate by at least one of a local process and a remote process using a signal that includes one or more data packets (e.g., data from one component interacting with another system via a network such as the Internet).

A program may be stored using various types of non-transitory computer readable media, and supplied to a computer. The non-transitory computer readable media include various types of tangible storage media. Some examples of the non-transitory computer readable media are magnetic recording media (e.g., flexible disk, magnetic tape, and hard disk drive), magneto-optical recording media (e.g., magneto-optical disk), Compact Disc-Read Only Memory (CD-ROM), Compact Disc-Recordable (CD-R), Compact Disc-Rewritable (CD-R/W), Digital Versatile Disc-ROM (DVD-ROM), Digital Versatile Disc-Recordable (DVD-R), Digital Versatile Disc-Rewritable (DVD-R/W), and a semiconductor memory (e.g., Mask ROM, Programmable ROM (PROM), Erasable PROM (EPROM), Flash ROM, and Random Access Memory (RAM)).

In addition, a program may be supplied to a computer by means of various types of transitory computer readable media. Some examples of the transitory computer readable media are an electric signal, an optical signal, and an electromagnetic wave. The transitory computer readable media may supply a program to a computer via a wired communication path such as an electric wire and an optical fiber, or a wireless communication path.

In addition, each example embodiment described above may be executed in combination where necessary. Moreover, not limited to the above-described example embodiments, the present invention may be executed in various modes.

### 6. Supplementary Notes

A part or all of the above-described example embodiments can also be described as in each of the following Supplementary Notes. However, the following Supplementary Notes are mere examples of the present invention, and the present invention is not limited to these cases.

### (Supplementary Note 1)

A relay apparatus configured to be connected to a plurality of access nodes, comprising:
a processor configured to decide whether or not an interface that connects between a first access node and a second access node via the relay apparatus is available; and
a transmitter configured to transmit information based on a result decided by the processor, to at least one of the first access node and the second access node.

### (Supplementary Note 2)

The relay apparatus according to Supplementary Note 1,
wherein the information indicates to suspend use of the interface.

### (Supplementary Note 3)

The relay apparatus according to Supplementary Note 1,
wherein the information indicates to resume use of the interface.

### (Supplementary Note 4)

The relay apparatus according to Supplementary Note 2,
wherein the information is an X2 Suspend message.

### (Supplementary Note 5)

The relay apparatus according to Supplementary Note 3,
wherein the information is an X2 Resume message.

### (Supplementary Note 6)

The relay apparatus according to any one of Supplementary Notes 1 to 5, further comprising:
a memory for storing at least one priority corresponding to any one of the plurality of access nodes.

### (Supplementary Note 7)

The relay apparatus according to Supplementary Note 6, transmitting the information to an access node that corresponds to high priority among priorities stored in the memory.

### (Supplementary Note 8)

The relay apparatus according to Supplementary Note 6, not transmitting the information to an access node that corresponds to low priority among priorities stored in the memory.

### (Supplementary Note 9)

The relay apparatus according to any one of Supplementary Notes 6 to 8,
wherein the priority is set based on use frequency of an access node associated with the priority.

### (Supplementary Note 10)

The relay apparatus according to Supplementary Note 2 or 4,
wherein the information that indicates to suspend use of the interface includes setting information for a timer included in an access node that receives the information.

### (Supplementary Note 11)

An access node connected to a relay apparatus, comprising:
a receiver configured to receive, from the relay apparatus, information on whether or not an interface that connects between the access node and another access node via the relay apparatus is available.

### (Supplementary Note 12)

The access node according to Supplementary Note 11,
wherein the access node further includes a timer, and
wherein the information includes setting information for the timer.

### (Supplementary Note 13)

The access node according to Supplementary Note 12,
wherein the timer starts based on the setting information, and
wherein the timer stops if receiving information that indicates to resume use of the interface until the timer is expired.

### (Supplementary Note 14)

The access node according to Supplementary Note 12,
wherein the timer starts based on the setting information, and
wherein the access node further comprising:
a processor that determines that a suspended interface is available, if not receiving information that indicates to resume use of the interface until the timer is expired.

### (Supplementary Note 15)

The access node according to any one of Supplementary Notes 11 to 14, further comprising:
a transmitter that, if the received information indicates to suspend use of the interface, notifies a core network connected to the access node that the use of the interface is to be suspended.

### (Supplementary Note 16)

A wireless communication system including a relay apparatus that is configured to be connected to a plurality of access nodes,
wherein the relay apparatus transmits information on whether or not an interface that connects between a first access node and a second access node via the relay apparatus is available, to at least one of the first access node and the second access node.

### (Supplementary Note 17)

A program that makes a computer execute a control method of a relay apparatus that is configured to be connected to a plurality of access nodes, the program being for executing:
deciding whether or not an interface that connects between a first access node and a second access node via the relay apparatus is available; and
transmitting information based on the decided result, to at least one of the first access node and the second access node.

### (Supplementary Note 18)

A program that makes a computer execute a control method of an access node that is connected to a relay apparatus, the program being for executing:
receiving, from the relay apparatus, information on whether or not an interface that connects between the access node and another access node via the relay apparatus is available.

### (Supplementary Note 19)

A control method of a relay apparatus configured to be connected to a plurality of access nodes, comprising:
deciding whether or not an interface that connects between a first access node and a second access node via the relay apparatus is available; and
transmitting information based on the decided result, to at least one of the first access node and the second access node.

### (Supplementary Note 20)

The control method of a relay apparatus according to Supplementary Note 19,
wherein the information indicates to suspend use of the interface.

### (Supplementary Note 21)

The control method of a relay apparatus according to Supplementary Note 19,
wherein the information indicates to resume use of the interface.

### (Supplementary Note 22)

The control method of a relay apparatus according to Supplementary Note 20,
wherein the information is an X2 Suspend message.

### (Supplementary Note 23)

The control method of a relay apparatus according to Supplementary Note 21,
wherein the information is an X2 Resume message.

### (Supplementary Note 24)

The control method of a relay apparatus according to any one of Supplementary Notes 19 to 23,
storing at least one priority corresponding to any one of the plurality of access nodes.

### (Supplementary Note 25)

The control method of a relay apparatus according to Supplementary Note 24,
transmitting the information to an access node that corresponds to high priority among stored priorities.

### (Supplementary Note 26)

The control method of a relay apparatus according to Supplementary Note 24,
not transmitting the information to an access node that corresponds to low priority among stored priorities.

### (Supplementary Note 27)

The control method of a relay apparatus according to any one of Supplementary Notes 24 to 26,
wherein the priority is set based on use frequency of an access node associated with the priority.

### (Supplementary Note 28)

The control method of a relay apparatus according to Supplementary Note 20 or 22,
wherein the information that indicates to suspend use of the interface includes setting information for a timer included in an access node that receives the information.

### (Supplementary Note 29)

A control method of an access node connected to a relay apparatus, comprising:
receiving, from the relay apparatus, information on whether or not an interface that connects between the access node and another access node via the relay apparatus is available.

### (Supplementary Note 30)

The control method of an access node according to Supplementary Note 29,
wherein the information includes setting information for a timer of the access node.

### (Supplementary Note 31)

The control method of an access node according to Supplementary Note 30,
wherein the timer starts based on the setting information, and
wherein the timer stops if receiving information that indicates to resume use of the interface until the timer is expired.

### (Supplementary Note 32)

The control method of an access node according to Supplementary Note 30,
wherein the timer starts based on the setting information, and

determining that a suspended interface is available, if not receiving information that indicates to resume use of the interface until the timer is expired.

### (Supplementary Note 33)

The control method of an access node according to any one of Supplementary Notes 29 to 32,
if the received information indicates to suspend use of the interface, notifying a core network connected to the access node that the use of the interface is suspended.

### (Supplementary Note 34)

A control method of a wireless communication system including a relay apparatus that is configured to be connected to a plurality of access nodes,
wherein the relay apparatus transmits information on whether or not an interface that connects between a first access node and a second access node via the relay apparatus is available, to at least one of the first access node and the second access node.

This application is based upon and claims the benefit of priority from Japanese patent application No. 2015-185359, filed on September 18, 2015, the disclosure of which is incorporated herein in its entirety by reference.

### [Reference signs List]

10 X2GW
20 eNB
21 macro cell
25 eNB
30 HeNB
35 HeNB
31 femto cell
40 EPC
50 S1 interface
60 X2 interface
70 UE
80 managing apparatus
110 first transmission/reception unit
120 second transmission/reception unit
130 processor
131 X2 connection managing component
132 control component
140 memory
210 transceiver
220 processor
230 memory
240 timer
250 processor
400 connection managing table
401 X2 connection managing block
501 Message Type
502 Suspended Time
503 Suspended target eNB list
504 Target eNB ID
601 Message Type
602 Resumed target eNB list
603 Target eNB ID
1000 relay apparatus
1001 processor
1002 transmitter
2000 access node
2001 receiver
6000 X2 interface

## Claims

1. A relay apparatus configured to be connected to a plurality of access nodes, comprising:
a processor configured to decide whether or not an interface that connects between a first access node and a second access node via the relay apparatus is available; and
a transmitter configured to transmit information based on a result decided by the processor, to at least one of the first access node and the second access node.

2. The relay apparatus according to claim 1,
wherein the information indicates to suspend use of the interface.

3. The relay apparatus according to claim 1,
wherein the information indicates to resume use of the interface.

4. The relay apparatus according to any one of claims 1 to 3, further comprising:
a memory for storing at least one priority corresponding to any one of the plurality of access nodes.

5. The relay apparatus according to claim 4, transmitting the information to an access node that corresponds to high priority among priorities stored in the memory.

6. The relay apparatus according to claim 4, not transmitting the information to an access node that corresponds to low priority among priorities stored in the memory.

7. The relay apparatus according to any one of claims 4 to 6,
wherein the priority is set based on use frequency of an access node associated with the priority.

8. An access node connected to a relay apparatus, comprising:
a receiver configured to receive, from the relay apparatus, information on whether or not an interface that connects between the access node and another access node via the relay apparatus is available.

9. A control method of a relay apparatus configured to be connected to a plurality of access nodes, comprising:
deciding whether or not an interface that connects between a first access node and a second access node via the relay apparatus is available; and
transmitting information based on the decided result, to at least one of the first access node and the second access node.

10. A control method of an access node connected to a relay apparatus, comprising:
receiving, from the relay apparatus, information on whether or not an interface that connects between the access node and another access node via the relay apparatus is available.
